**Europäisches Patentamt**

**European Patent Office**

**Office européen des brevets**

(19)

(11) Veröffentlichungsnummer : **0 146 648 B1**

(12) **EUROPÄISCHE PATENTSCHRIFT**

(45) Veröffentlichungstag der Patentschrift :
02.12.87

(51) Int. Cl.⁴ : **F 16 K 11/06**

(21) Anmeldenummer : **83112949.9**

(22) Anmeldetag : **22.12.83**

(54) **Schliess/Öffne- und Regulieranordnung für Wärmeaustauschanlagen.**

(43) Veröffentlichungstag der Anmeldung :
**03.07.85 Patentblatt 85/27**

(45) Bekanntmachung des Hinweises auf die Patenterteilung : **02.12.87 Patentblatt 87/49**

(84) Benannte Vertragsstaaten :
**AT CH DE GB LI**

(56) Entgegenhaltungen :
**DE-A- 2 546 496**
**FR-A- 2 250 054**

(73) Patentinhaber : **Svensson, Arne**
**Postfach 91**
**N-4901 Tvedestrand (NO)**

(72) Erfinder : **Svensson, Arne**
**Postfach 91**
**N-4901 Tvedestrand (NO)**

(74) Vertreter : **Abitz, Walter, Dr.-Ing. et al**
**Abitz, Morf, Gritschneder, Freiherr von Wittgenstein**
**Postfach 86 01 09**
**D-8000 München 86 (DE)**

**Beschreibung**

Die Erfindung betrifft eine Schließ/Öffne- und Regulieranordnung für Wärmeaustauschanlagen mit Vorlauf- und Rücklaufleitungen zwischen der Speiseseite (Primärseite) und Verbraucherseite (Sekundärseite). Die Anordnung weist einen zylindrischen Kanal auf, der an einem oder beiden Enden geschlossen ist, wobei der Vorlauf und der Rücklauf der Primärseite in axialem Abstand voneinander in den Kanal einmünden und der Vorlauf und der Rücklauf der Sekundärseite in axialem Abstand voneinander und in Winkelabstand zu dem Vorlauf und dem Rücklauf der Primärseite ebenfalls in den Kanal einmünden. Ein zylindrischer Kolbenschieber ist in dem Kanal drehbar und axial verschiebbar angeordnet.

In Wärme/Kühlanlagen ist normalerweise ein Shuntventil angeordnet, um die Wärme/Kälteseite von der Verbraucherseite zu trennen und um die Möglichkeit zur Regulierung zu haben.

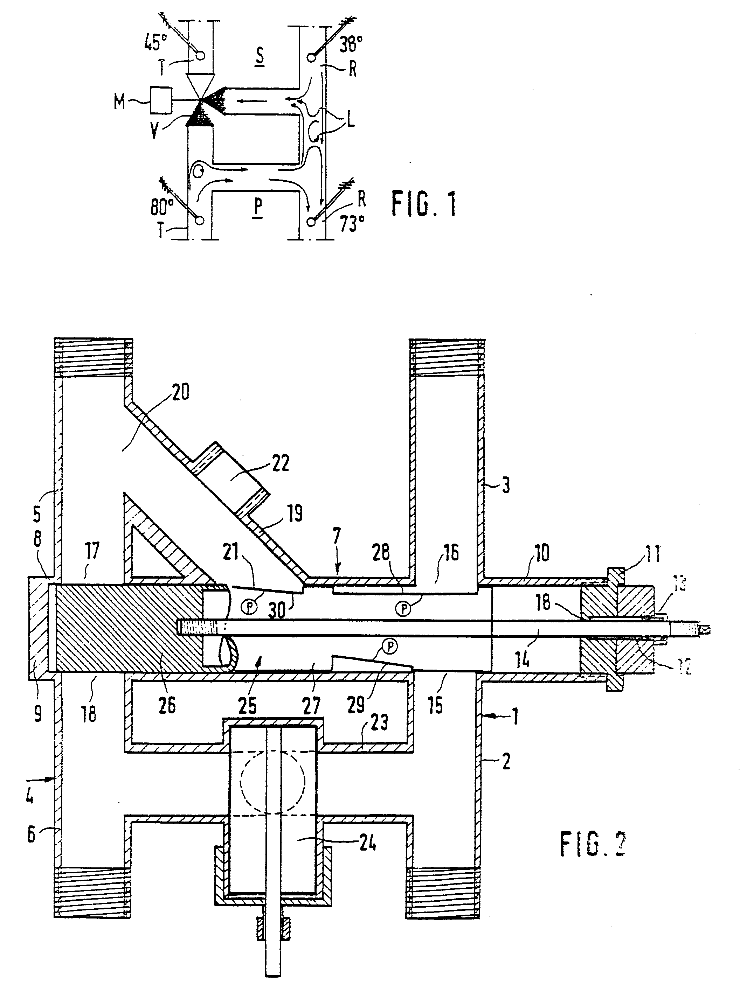

Meistens ist das Shuntventil in die Anlage in einer sogenannten Shuntkupplung eingebaut, wie sie im Prinzip in Fig. 1 dargestellt ist. Das Leitungssystem auf der Speiseseite der Shuntkupplung (für Wärme oder Kälte) wird gewöhnlich Primärkreis und das auf der Verbraucherseite der Kupplung Sekundärkreis genannt. Der Sekundärkreis kann eine Mehrzahl von Verbrauchern umfaßen. Die in Fig. 1 gezeigte Kupplung ist mit einem Dreiwegventil versehen, welches von einem thermostatgesteuerten Motor in Übereinstimmung mit dem Wärme/Kältebedarf in dem Sekundärkreis betätigt wird.

Wenn kein Bedarf für Wärme/Kälte in dem Sekundärkreis vorliegt, soll das Dreiwegventil geschlossen sein, so daß keine Zirkulation in dem Leitungssystem zwischen dem Primärkreis und dem Sekundärkreis vorliegt. Es hat sich jedoch gezeigt, daß eine Shuntkupplung mit nur einem Dreiwegventil nicht ausreicht um Wärmeverluste auf Grund der Strömungslecks zwischen den Kreisen zu hindern. Fig. 1 verdeutlicht ein Beispiel unbeabsichtigter Zirkulation in einer Shuntkupplung. Um unbeabsichtigte Zirkulation zu verhindern, welche große Wärmeverluste zur Folge hat, kann eine weitere Schließeinrichtung in dem Shuntkupplungskreis angeordnet werden. Eine solche Schließeinrichtung kann aus einem angetriebenen Schließventil, einem magnetischen Ventil, einem Rückschlagventil, einem U-Rohr mit Flüssigkeitssperre u. a. bestehen. Ein Nachteil mit solchen weiteren Schließeinrichtungen ist, daß nicht nur die Anlage teurer wird, sondern diese Einrichtungen auch individuell bedient werden müssen, da sie gewöhnlich an dem normalen Regulierbetrieb nicht teilnehmen, weil die Regulierfunktion dem Dreiwegventil zugeteilt ist.

Voraussetzung für den Regulierbetrieb ist, daß das Medium in dem Primärkreis und in dem Sekundärkreis zirkuliert und deshalb sind diese Kreise mit je einer Umlaufpumpe versehen. Außerdem kann die Anlage weitere Schließventile, Drosselventile, Kükenhähne, Thermometer usw. umfassen. Einige dieser Komponenten können auch innerhalb der Shuntkupplung zwischen dem Vorlauf und dem Rücklauf der Primärseite oder der Sekundärseite angeordnet werden.

Bei einem dertigen, aus der FR-A-2 250 054 bekannten Regulieranordnung besteht der Schieber selbst aus mehreren gegeneinander beweglichen Teilen und weist eine Spindel innerhalb einer Hülse und einen Hülsenteil auf, der eine axiale Verschiebung und Drehung der Spindel zuläßt. Der Schieber besteht außerdem aus zwei Teilen und einem dazwischenliegenden Dichtungsring, wobei jeder Schieberteil aus einem stationären Teil und einer Anzahl beweglicher Kegelteile besteht. Da derartige Regulieranordnungen großen Temperatur- und Druckschwankungen ausgesetzt sind, ist wegen des komplizierten Aufbaus der bekannten Regulieranordnung ein störungsfreier Betrieb nicht mit Sicherheit gewährleistet und sind häufige Inspektionen erforderlich.

Der Erfindung, wie sie in Patentanspruch 1 angegeben ist, liegt die Aufgabe zugrunde, eine zuverlässig arbeitende Schließ/Öffne- und Regulieranordnung zu schaffen, die eine kompakte Baueinheit ist, die sich leicht montieren läßt und wenig Raum beansprucht.

Die durch die Erfindung erzielbaren Vorteile bestehen insbesondere darin, daß die Anordnung in der geschlossenen Stellung unbeabsichtigte Strömungslecks zwischen der Primärseite und der Sekundärseite verhindert.

Bevorzugte Ausgestaltungen der Erfindung sind Gegenstand der Unteransprüche.

Die Erfindung wird nachfolgend anhand der Zeichnung näher erläutert, wobei sich die Ausführungsbeispiele zwar auf Wärmeanlagen beziehen, die Erfindung jedoch in gleicher Weise auch für Kühlanlagen, z. B. mit Eiswasser als Kühlmedium verwendbar ist.

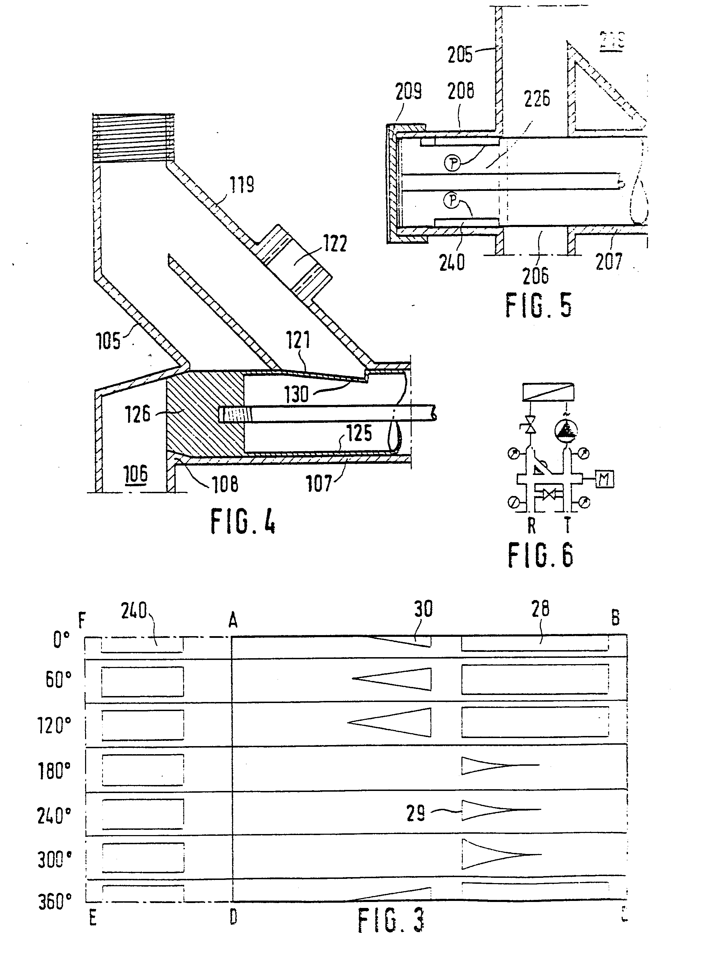

Fig. 1 zeigt die eingangs erwähnte bisher übliche Shuntkupplung zwischen dem Primärkreis und dem Sekundärkreis einer Wärmeanlage (Stand der Technik). In Fig. 2 wird schematisch und zum Teil im Schnitt eine Regulieranordnung gemäß der Erfindung gezeigt, Fig. 3 ist ein Plan einer alternativen Anordnung der Kolbenschieberöffnungen. Fig. 4 zeigt eine alternative Ausbildung Zweigleitung, Fig. 5 stellt eine weitere Ausbildung desselben Teiles wie in Fig. 4 dar, und Fig. 6 entspricht der Fig. 1, jedoch zeigt sie die Anordnung gemäß der Erfindung.

Fig. 1 zeigt die unbeabsichtigte Zirkulation in einer nur schematisch dargestellten Shuntkupplung bekannter Ausführung. Die Primärseite ist mit P bezeichnet, die Sekundärseite mit S, die Vorlaufleitungen mit T, die Rücklaufleitungen mit R und das Dreiwegventil mit V. Das Dreiwegventil V wird von einem thermostatgesteuerten Motor M angetrieben. Selbst wenn das Dreiwegventil V geschlossen ist, entstehen Leckagenströme und eine Leckage-Zirkulation in dem mit L vermerkten Teil der Kupplung mit der Folge, daß Gleichge-wichtbedingungen im Primärkreis nicht einge-stellt werden können und so ein kontinuierlicher Wärmeverlust entsteht.

In Fig. 2 ist schematisch eine Ausführungform der Regulieranordnung gemäß der Erfindung dargestellt. Das Ventil erfüllt dabei nicht nur die Funktion eines Regulierventils (Dreiwegventil V) in der Shuntkupplung gemäß Fig. 1, sondern es bewirkt auch eine vollständige strömungsmäßige Trennung zwischen dem Sekundärkreis und dem Primärkreis, wenn das Ventilelement in die Schließstellung gebracht worden ist.

Die Anordnung umfaßt zwei Leitungen 1 und 4, welche parallel in kleinem Abstand voneinander angeordnet sind. An einer Stelle zwischen den Enden der Leitungen 1 und 4 erstreckt sich ein als Kolbenschieberrohr dienender zylindrischer Kanal 7 und teilt strömungsmäßig die Leitung 1 in zwei Abschnitte 2 und 3 und die Leitung 4 in zwei Abschnitte 5 und 6 auf, die sich paarweise auf je einer Seite des zylindrischen Kanals 7 befinden. Die Leitungen 1 und 4 und der Kanal 7 befinden sich im wesentlichen in derselben Ebene, und der Kanal 7 hat einem größeren Durchmesser als die Leitungen 1 und 2. Das eine Ende 8 des Kanals 7 ragt ein kurzes Stück über die Leitung 4 hinaus und ist mit einem Boden 9 verschlossen, während das andere Ende 10 des Kanals 7 wesentlich länger und offen ist und mit einer Verschraubung 11 abgeschlossen ist. Die Verschraubung hat eine Bohrung 12 mit einer Ringdichtung 13 zur Durchführung einer Kolbenstange 14, welche in der Bohrung 12 axial verschiebbar und drehbar ist.

In Praxis ist die Anordnung aus Rohrstücken zusammengeschweißt und mündet der Abschnitt 2 mit seiner Öffnung 15 ein in den Kanal 7. Der Abschnitt 3 hat eine entsprechende Öffnung 16, während die Abschnitte 5 und 6 eine Öffnung 17 bzw. 18 aufweisen. Eine Zweigleitung 19 mit etwa demselbem Durchmesser wie die Leitung 4 verläuft schräg zwischen dem Abschnitt 5 und einer Stelle des Kanals 7 etwa in der Mitte zwischen den Leitungen 1 und 4. Die Zweigleitung 19 verbindet den Abschnitt 5 mit dem Kanal 7 durch Öffnungen 20 und 21. Die Zweigleitung 19 ist mit einem angeschweißten Ansatz 22 versehen, für eventuelle Ausbohrung für Montierung eines Kü-kenhahnes, Drosselventils oder Schließventils. Ei-ne Verbindungsleitung 23 erstreckt sich zwischen den Leitungen 1 und 4 und verbindet diese miteinander. Die Verbindungsleitung 23 ist in der Mitte mit einem Kükenhahn 24 oder einem Schließventil versehen.

In dem zylindrischen Kanal 7 ist drehbar und verschiebbar ein Kolbenschieber 25 angeordnet, welcher fest mit der Kolbenstange 14 verbunden ist. Der Schieber 25 hat einen geschlossenen Endteil 26, welcher, wenn der Schieber 25 in Schließstellung ist (ganz links in Fig. 2), sich etwa von dem Boden 9 des einen Endes 8 des Kanal 7 zu einer Stelle in kleinem Abstand vom Rand der Öffnung 21 erstreckt. Die Kolbenstange 14 ist an diesem Endteil 26 des Kolbenschiebers 25 befestigt. Der übrige Teil 27 des Kolbenschiebers 25 ist als ein Rohr mit offenem Ende an der Kolbenstangenseite ausgebildet und erstreckt sich in der genannten Stellung ein kleines Stück am Rand der Öffnungen 15 oder 16 in dem Rohr 2 bzw. 3 vorbei, wie in Fig. 2 dargestellt.

Der rohrförmige Teil 27 des Schiebers 25 ist mit einem bis drei Sätzen Öffnungen 28, 29, 30 ausgeführt, die durch das Innere des Rohrs 27 miteinander verbunden sind. Fig. 3 zeigt die Schieberfläche mit drei Sätzen Öffnungen 28, 29, 30 und in abgewickeltem Zustand. Für die Ausführung gemäß Fig. 2 ist die Schieberfläche vermerkt mit A, B, C, D. Der erste Öffnungssatz umfaßt drei längliche, rechteckige Öffnungen 28, welche einzeln, mit der Öffnung 16 des Abschnitts 3 zusammenwirken. Der zweite Öffnungssatz umfaßt drei keilförmige oder dreieckige Öffnungen 29, welche den zuerst genannten Öffnungen 28 diametral entgegengesetzt angeordnet sind und welche mit der Öffnung 15 des Abschnitts 2 zusammenwirken können. Die Öffnungen 29 sind in der Öffnungsrichtung des Kolbenschiebers 25 zur Erzielung einer feinregulierten Durchströmung zugespitzt. Der dritte Öffnungssatz umfaßt drei dreieckförmige Öffnungen 30, welche auf etwa derselben Generatrix wie die Öffnungen 28 angeordnet sind. Ihre Spitzen sind in der Schließrichtung des Schiebers 25 gerichtet. Wie aus Fig. 2 hervorgeht, ist die Länge der Öffnungen 28 so angepaßt, daß diese Öffnungen 28 in jeder Stellung des Kolbenschiebers 25 mit der Öffnung 16 des Abschnitts 3 in Verbindung stehen. In der Schließstellung des Schiebers 25 befinden sich die Öffnungen 30 unmittelbar gegenüber der Öffnung 21 des Zweigleitung 19. In der letztgenannten Stellung befinden die Öffnungen 29 sich außerhalb des Bereiches der Öffnung 15 des Abschnitts 2. Die Öffnungen 29 stehen in Verbindung mit der Öffnung 15, wenn sich der Kolbenschieber 25 in der Öffnungs-stellung befindet. Der geschlossene Endteil 26 des Kolbenschiebers 25 dient zum allmählichen oder teilweisen Öffnen und Schließen der Öffnungen 17, 18 in dem Abschnitt 5 bzw. 6.

Die Gestaltung der Schieberöffnungen kann von den oben erläuterten Ausführungen abweichen. Es ist sogar möglich, die Öffnungen 28, 29, 30 kreisförmig zu gestalten. Auch kann eine z. B. rechteckige Öffnung durch mehrere runde Öffnungen ersetzt werden.

Wie erwähnt ist die Ventilanordnung in Fig. 2 in Schließstellung gezeigt. Es sei angenommen, daß die Leitung 1 zum Vorlauf und die Leitung 4 zum Rücklauf gehört, so daß die Abschnitte 2 und 6 dem Primärkreis und die Abschnitte 3 und 5 dem Sekundärkreis angehören. Weiter sei angenommen, daß der Kükenhahn 24 offen steht. Wenn der Kolbenschieber 25 sich in der genannten Stellung befindet, ist der Vorlauf blockiert bei 15 und ist der Rücklauf blockiert bei 17 und 18. Eine Verbindung besteht zwischen dem Abschnitt 5 und dem Abschnitt 3 durch die Zweigleitung 19, eine der Öffnungen 30, das Innere des Schiebers 25 und eine der Öffnungen 28. Auf diese Weise ist der Sekundärkreis von dem Primärkreis hydraulisch isoliert. In dem Primärkreis besteht die Verbindung zwischen dem Abschnitt 2 des Verlaufs und dem Abschnitt 6 des Rücklaufs. Eventuell kann in bestimmten Systemen der Kükenhahn 24 geschlossen bleiben. Der Kükenhahn 24 ist für die Erfindung nicht wesentlich und dasselbe gilt für die Verbindungsleitung 23. Es ist aber verständlich, daß diese Elemente die Möglichkeiten der Verwendung der Anordnung in ungleichen Reguliersystemen wesentlich erweitern.

Wenn der Kolbenschieber 25 sich zur Öffnungsstellung, d. h. nach rechts gemäß Fig. 2, bewegt, werden die Öffnungen 29 allmählich geöffnet und die Öffnung 21 allmählich geschlossen, während die Verbindung zwischen den Rohröffnungen 17 und 18 verhältnismäßig rasch geöffnet wird. Die Durchströmung wird durch das Axialverschieben des Kolbenschiebers 25 reguliert. Die Kolbenstange 14 ist in Treibverbindung mit einer kraftgetriebenen Einrichtung, welche den Schieber 25 axial verschiebt. Durch das Drehen des Kolbenschiebers 25 von Hand kann die Kapazität des Ventils und die Regulierfähigkeit desselben durch die Wahl der Öffnungen 28, 29, 30 in den drei Öffnungssätzen gewählt werden. Die drehbare Wähleinrichtung für die Öffnungsgröße macht die Regulieranordnung in der Anwendung sehr flexibel.

In Fig. 4 ist eine andere Ausführung des Endteils 126 des Kolbenschiebers 125 und des angrenzenden Bereiches der Regulieranordnung gezeigt, wobei die Bezugziffern gegenüber denen von Fig. 2 um 100 erhöht sind. Wie gezeigt, ist der Abschnitt 105 schräg in den zylindrischen Kanal 107 eingeführt und verläuft parallel in der zweigleitung 119. Der andere Abschnitt 106 ist ein Stück vorbei an der Achse des Kanals 107 geführt und der Endteil 108 des Kanals 107 mündet hier ein in dem Abschnitt 106, der in diesem Fall als ein kegelformiger Ventilsitz gestaltet ist. Der Endteil 126 des Kolbenschiebers 125 ist mit einem Endkegel geformt, welcher mit dem Ventilsitz zusammenwirkt. Auf diese Weise wird eine dichtere Abschließung erreicht und außerdem eine allmähliche Öffnung für den Mediumstrom durch die Abschnitte 105 und 106.

Fig. 5 zeigt eine Gestaltung, bei der der Kanal 207 außerhalb der Abschnitte 205, 206 deutlich verlängert ist, so daß eine Rohrbüchse 208 als Führung für die Verlängerung 226 des Kolbenschiebers gebildet ist. Diese Verlängerung ist mit einem Satz von Öffnungen 240 versehen, wie in Fig. 3 in der Fläche A, D, E, F dargestellt. Die totale Schieberfläche wird in diesem Fall durch das Viereck B, C, E, F repräsentiert. Der Nachteil dieser Ausführung ist die Vergrößerung der Baulänge der Anordnung. Der Vorteil dagegen ist eine sehr zuverlässige Steuerung des Kolbenschiebers.

Die Anordnung gemäß der Erfindung ist nicht auf die in den Zeichnungen dargestellten und voran beschriebenen Ausführungsformen beschränkt. Wie bereits gezeigt kann die Form des Kolbenschiebers und der Leitungsabschnitte verschieden sein. Wie angedeutet kann z. B. die Zweigleitung 19 mit einem zusätzlichen Ventil versehen werden. Die Zweigleitung 19, 119 kann beliebig gestaltet werden (z. B. als ein Rohrbogen) und sie kann sich sowohl auf der Primärseite wie auf der Sekundärseite befinden, da diese miteinander verwendet werden, abhängig davon in was für eine Anlage die Anordnung montiert wird.

Die Abschnitte 2, 3, 5, 6 brauchen nicht in derselben Ebene zu liegen. Liegen sie nicht in derselben Ebene, muß die Öffnungsebene für die Öffnungen des Kolbenschiebers entsprechend geändert werden. Wenn der Kolbenschieber viele Öffnungen hat, welche auf dem Umfang angeordnet sind, wie Fig. 3 dargestellt, muß die Erstreckung der Öffnungen, z. B. 15, 16, 17, 18, in Umfangsrichtung entsprechend begrenzt werden, damit nur eine Öffnung des Kolbenschiebers jeweils mit der entsprechenden Öffnung des Schieberrohres zusammenwirkt.

Die Regulieranordnung braucht nicht aus Rohren hergestellt zu sein. Sie kann auch als ein Gußstück mit Leitungskanälen und einem zylindrischen Kanal für dem Kolbenschieber hergestellt werden. Eine Kombination von Rohren und gegossenem Material, z. B. Leichtmetall oder Kunststoff, kann insbesondere für Kühlanlagen zweckmäßig sein.

Wie bereits erwähnt können die Kolbenschieberöffnungen einen anderen Umriß haben als in Fig. 1 gezeigt. Die Kolbenstange kann gegebenenfalls durch das andere, entgegengesetzte Kanalende (Boden 9) als gezeigt durchgeführt werden, während das erste Kanalende (Endteil 10) geschlossen bleibt.

**Patentansprüche**

1. Schließ/Öffne- und Regulieranordnung für Wärmeaustausch-Anlagen mit Vorlauf- und Rücklaufleitungen zwischen der Speiseseite (Primärseite) und der Verbraucherseite (Sekundärseite) der Anlage, mit einem zylindrischen Kanal (7), der an einem oder beiden Enden (8, 10) geschlossen ist, wobei der Vorlauf und der Rücklauf (Abschnitte 2 bzw. 6) auf der Primärseite in axialem Abstand voneinander in den Kanal (7) einmünden und der Vorlauf und der Rücklauf (Abschnitte 3 bzw. 5) auf der Sekundärseite in axialem Abstand voneinander und im Winkelabstand zu dem Vorlauf und dem Rücklauf (Abschnitte 2 bzw. 6) auf der Primärseite ebenfalls in den Kanal (7) einmünden und mit einem zylindrischen Kolbenschieber (25), der in dem Kanal (7) drehbar und axial verschiebbar angeordnet ist, dadurch gekennzeichnet, daß ein Abschnitt (5) auf der Primär- oder der Sekundärseite durch eine Zweigleitung (19) zusätzlich mit dem Kanal (7) an einer Stelle verbunden ist, die in der Axialrichtung zwischen dem Vorlauf und dem Rücklauf (Abschnitte 3 bzw. 5) auf der Primär- bzw. Sekundärseite liegt, und daß der Kolbenschieber (25) mindestens teilweise als ein Rohr (27) mit Öffnungen (28, 29, 30) in der Rohrwandung ausgebildet ist, die mit dem Kolbenschieber (25) in geschlossener Stellung den Abschnitt (5) durch die Zweigleitung (19) mit dem anderen Abschnitt (3) auf der Primär- bzw. Sekundärseite verbinden und in offener Stellung die Vorläufe bzw. Rückläufe der Primärseite und der Sekundärseite miteinander verbinden.

2. Anordnung nach Anspruch 1, dadurch gekennzeichnet, daß der Kolbenschieber (25) mit mehreren Sätzen von Öffnungen (28, 29, 30, 240) versehen ist, wobei die einzelnen Öffnungssätze Öffnungen mit unterschiedlicher Form und/oder unterschiedlichem Durchströmungsquerschnitt haben können (Fig. 3).

3. Anordnung nach Anspruch 1 oder 2, dadurch gekennzeichnet, daß der geschlossene Endteil (26) des Kolbenschiebers (25) durch Axialverschiebung die Verbindung zwischen zwei Hinläufen oder Rückläufen (5 bzw. 6) öffnet bzw. schließt.

4. Anordnung nach Anspruch 3, dadurch gekennzeichnet, daß einer (106) der zwei Abschnitte auf der Primärseite axial in den Endteil des zylinderförmigen Kanals (107) mündet, wobei die Mündung als ein Ventilsitz (108) gestaltet ist, gegen den der Endteil (126) des Kolbenschiebers als Ventilkörper in Anlage bringbar ist.

5. Anordnung nach Anspruch 2, 3 oder 4, dadurch gekennzeichnet, daß einige der Öffnungen (29, 30) für allmähliches Öffnen/Schließen durch Axialverschiebung des Kolbenschiebers keilförmig in Axialrichtung gestaltet sind.

6. Anordnung nach einem der Ansprüche 1 bis 5, dadurch gekennzeichnet, daß die Achsen des jeweiligen Vorlaufs und Rücklaufs (Abschnitte 2, 3, 5, 6), des Kanals (7) und der Zweigleitung (19) in einer gemeinsamen Ebene liegen.

7. Anordnung nach einem der Ansprüche 1 bis 6, dadurch gekennzeichnet, daß der Vor- und der Rücklauf Abschnitte (2, 6) auf der Seite der Regulieranordnung, die keine Zweigleitung (19) aufweist, mittels einer By-Pass-Verbindungsleitung (23), die mit einem Schließventil (24) versehen ist, außerhalb des zylindrischen Kanals (7) miteinander verbunden sind.

8. Anordnung nach einem der Ansprüche 1 bis 7, dadurch gekennzeichnet, daß die Zweigleitung (19) mit einem Drosselventil versehen ist.

**Claims**

1. Closing/opening and regulating arrangement for heat exchanging installations with feed and return lines between the supply side (primary side) and the consumer side (secondary side) of the installation, with a cylindrical channel (7) which is closed at one or both ends (8, 10), with the feed and return (sections 2 and 6 respectively) on the primary side, at an axial distance from one another, leading into the channel (7), and the feed and return (sections 3 and 5 respectively) on the secondary side, at an axial distance from one another and at an angular distance from the feed and return (sections 2 and 6 respectively) on the primary side, likewise leading into the channel (7), and with a cylindrical piston-type slide valve (25) which is rotatably and axially displaceably arranged in the channel (7), characterized in that a section (5) on the primary or the secondary side is additionally connected through a branch line (19) to the channel (7) at a point which, in the axial direction, lies between the feed and the return (sections 3 and 5 respectively) on the primary or secondary side, and that the piston-type slide valve (25) is designed at least partly as a tube (27) with openings (28, 29, 30) in the tube wall which, with the piston-type slide valve (25) in the closed position, connect the section (5) to the other section (3) on the primary or secondary side through the branch line (19) and, in the open position, connect the feeds or returns of the primary side and the secondary side to one another.

2. Arrangement according to claim 1, characterized in that the piston-type slide valve (25) is provided with several sets of openings (28, 29, 30, 240), with it being possible for the individual sets of openings to have a different shape and/or a different cross-section of flow (Fig. 3).

3. Arrangement according to claim 1 or 2, characterized in that the closed endpart (26) of the piston-type slide valve (25), by axial displacement, opens or closes the connection between two feeds or returns (5 and 6 respectively).

4. Arrangement according to claim 3, characterized in that one (106) of the two sections on the primary side leads axially into the endpart of the cylindrical channel (107), with the mouth being configured as a valve seat (108) against which the endpart (126) of the piston-type slide valve, as a valve body, can be brought to bear.

5. Arrangement according to claim 2, 3 or 4, characterized in that some of the openings (29, 30) are of wedge-shaped configuration in the axial direction for gradually opening/closing by axial displacement of the piston-type slide valve.

6. Arrangement according to one of claims 1 to 5, characterized in that the axes of the respective feed and return (sections 2, 3, 5, 6), the channel (7) and the branch line (19) lie in a common plane.

7. Arrangement according to one of claims 1 to 6, characterized in that the feed and return sections (2, 6), on the side of the regulating arrangement which has no branch line (19), are connected to one another outside the cylindrical channel (7) by means of a bypass connecting line (23) which is provided with a closing valve (24).

8. Arrangement according to one of claims 1 to 7, characterized in that the branch line (19) is provided with a choke valve.

**Revendications**

1. Dispositif de fermeture/ouverture et de réglage pour installations échange de chaleur avec des conduites d'aller et des conduites de retour entre le côté alimentation (côté primaire) et le côté consommateurs (côté secondaire) de l'installation, avec une gaine cylindrique (7), qui est fermée en l'une de ses extrémités ou en les deux (8, 10), la conduite d'aller et la conduite de retour (tronçons respectivement 2 et 6) du côté primaire débouchant dans la gaine (7) à une certaine distance axiale l'une de l'autre, et la conduite d'aller et la conduire de retour (tronçons respectivement 3 et 5) du côté secondaire débouchant eux aussi dans la gaine (7), à une certaine distance axiale l'une de l'autre, et à une certaine distance angulaire par rapport à la conduite d'aller et à la conduite de retour (tronçons respectivement 2 et 6) du côté primaire, et avec un robinet à piston cylindrique (25), disposé dans la gaine (7) en pouvant subir un mouvement de rotation et de translation axiale, caractérisé en ce qu'un tronçon (5) du côté primaire ou du côté secondaire est relié, en outre, par une conduite de dérivation (19), avec la gaine (7) en un point qui se trouve, dans le sens axial, entre la conduite d'aller et la conduite de retour (respectivement tronçons 3 et 5), respectivement du côté primaire et du côté secondaire, et que le robinet à piston (25) est, au moins partiellement, constitué d'un tube (27) comportant des ouvertures (28, 29, 30) dans la paroi du tube, qui relient le tronçon (5), par la conduite de dérivation (19), le robinet à piston (25) étant en position fermée, avec l'autre tronçon (3) sur le côté respectivement primaire et secondaire, et, en position ouverte, assurent la liaison entre les conduites d'aller et les conduites de retour du côté primaire et du côté secondaire.

2. Dispositif selon la revendication 1, caractérisé en ce que le robinet à piston (25) est pourvu de plusieurs groupes d'ouvertures (28, 29, 30, 240), les différents groupes d'ouvertures pouvant avoir des ouvertures de formes différentes et/ou de section d'écoulement différentes (Fig. 3).

3. Dispositif selon la revendication 1 ou 2, caractérisé en ce que la partie terminale fermée (26) du robinet à piston (25) ouvre ou ferme, par translation axiale, la liaison entre deux conduites d'aller ou deux conduites de retour (5 ou 6).

4. Dispositif selon la revendication 3, caractérisé en ce que l'un des deux tronçons (106) du côté primaire débouche axialement dans la partie terminale du canal cylindrique (107), l'embouchure étant constituée d'un siège de soupape (108), contre lequel peut venir s'appuyer la partie terminale (126) du robinet à piston, jouant le rôle de corps de soupape.

5. Dispositif selon la revendication 2, 3 ou 4, caractérisé en ce que quelques-unes des ouvertures (29, 30) ont la forme d'un coin dans le sens axial, pour permettre l'ouverture/la fermeture progressives du robinet à piston, par leur translation axiale.

6. Dispositif selon l'une des revendications 1 à 5, caractérisé en ce que les axes de la conduite d'aller et de la conduite de retour (tronçons 2, 3, 5, 6), de la gaine (7) et de la conduite de dérivation (19), se trouvent dans un même plan.

7. Dispositif selon l'une des revendications 1 à 6, caractérisé en ce que la conduite d'aller et la conduite de retour sont reliées l'une à l'autre, à l'extérieur de la gaine cylindrique (7), sur le côté du dispositif de régulation, lequel ne possède pas de conduite de dérivation, à l'aide d'une conduite de liaison de dérivation (23) pourvue d'une soupape de fermeture (24).

8. Dispositif selon l'une des revendications 1 à 7, caractérisé en ce que la conduite de dérivation (19) est pourvue d'une soupape d'étranglement.

0 146 648

FIG. 1

FIG. 2

FIG. 5

FIG. 4

FIG. 6

FIG. 3